# EUROPEAN PATENT APPLICATION

(11) **EP 4 614 256 A1**
(43) Date of publication of application: **10.09.2025**
(21) Application number: 23884898.0
(22) Date of filing: 31.10.2023
(51) Int. Cl.: G05B 19/418

(54) **CONTROL METHOD AND APPARATUS FOR AUTOMATION SYSTEM, AND CONTROL METHOD AND APPARATUS FOR AUTOMATION PROCESS**

(30) Priority: 04.11.2022 CN 202211376135
(71) Applicant: Megarobo Technologies Co., Ltd., Beijing 102200 (CN)
(72) Inventor: SONG, Mengqi, Beijing 102200 (CN)
(74) Representative: Hofmann, Matthias
(86) International application number: PCT/CN2023/128171
(87) International publication number: WO 2024/093968

(57) **Abstract**

A control method for an automation system, a control method for an automation process of the automation system, a control apparatus for the automation system, a control apparatus for the automation process of the automation system, an electronic device, and a storage medium. The control method for the automation system comprises: in response to an operation of a user, determining whether a cap addition/removal operation is comprised in an automation process; for the situation where the cap addition/removal operation is comprised, determining whether a starting position and/or a destination position of a task operation in the automation process supports the cap addition/removal operation; when a first determination result is that the starting position and/or the destination position of the task operation in the automation process supports the cap addition/removal operation, determining the starting position and/or the destination position as an execution position of the cap addition/removal operation; and delivering a task operation instruction in the automation process to a transport operation execution device, so that the transport operation execution device performs task deduction according to the task operation instruction. Therefore, the execution time of the cap addition/removal operation is saved, and the execution efficiency of the task operation is effectively ensured.

## Description

The present application claims priority to Chinese Patent Application No. 202211376135.9, titled "CONTROL METHOD AND APPARATUS FOR AUTOMATION SYSTEM, AND CONTROL METHOD AND APPARATUS FOR AUTOMATION PROCESS", filed on November 04, 2022 with the China National Intellectual Property Administration, which is incorporated herein by reference in its entirety.

### FIELD

The present disclosure relates to the field of automation control, and more particularly, to a method for controlling an automation system, a method for controlling an automation process, an apparatus for controlling an automation system, an apparatus for controlling an automation process, an electronic device, and a storage medium.

### BACKGROUND

Currently, many technical fields are constantly being automated and transformed so as to achieve the purpose of liberating manpower and improving efficiency. Automation systems are extensively used in automated manufacturing, automated detection, automated testing, and the like. Users construct an automation process as a whole by means of an interface provided by an automation system, and then control the operation of the automation system based on the automation process.

However, as demands for automation improve continuously, a large number of devices and steps are involved in a set of automation process. Furthermore, in conventional technology, there are many types of devices, which may lead to completely different requirements for devices with the same function due to differences in types or models. Different requirements for devices may bring various restrictions to the configuration of the automation process. If these restrictions are ignored in actual execution of the automation process, the automation process may fail to be performed smoothly or a large deviation may occur in an execution result. For example, plate position heights supported by different devices and orientations of well plates entering into devices may be the same or different. For the transfer operation in the automation process, instructions received by a controller of a transfer device mainly include a relevant parameter of a starting position and a relevant parameter of a destination position. If a lidding/delidding operation is configured in the process of the transfer operation, the lidding/delidding operation is performed at an adjustment position in a case that the two aforementioned parameters are different. Specifically, the transfer device first grabs the well plate at the starting position and transfers the well plate to the adjustment position, and then the transfer device moves from the adjustment position to a lid storage position, grabs a lid, and returns to the adjustment position to add the lid to the well plate, so as to implement a lidding operation. Finally, the transfer device grabs the well plate and transfers the well plate to the destination position. Apparently, during the execution of the automation operation by the automation system, it is required to perform the lidding/delidding operation at the adjustment position, making the automation process complex and time-consuming, and may even include unnecessary steps.

Therefore, attention is drawn to finding a solution to address the above facts.

### SUMMARY

In view of the above-described problems, the present disclosure is provided. According to a first aspect of the present disclosure, a method for controlling an automation system is provided. The method for controlling the automation system includes: determining, in response to an operation of a user, whether a lidding/delidding operation is included in an automation process; determining, in response to the lidding/delidding operation being included, whether a starting position and/or a destination position of a task operation in the automation process supports the lidding/delidding operation; determining, in response to a first determination result being that the starting position and/or the destination position of the task operation in the automation process supports the lidding/delidding operation, the starting position and/or the destination position as an execution position of the lidding/delidding operation; and sending a task operation instruction in the automation process to a transfer operation execution device, to cause the transfer operation execution device to perform task deduction according to the task operation instruction, wherein the task operation instruction includes a transfer operation instruction and a lidding/delidding operation execution position parameter instruction.

According to a second aspect of the present disclosure, a method for controlling an automation process is further provided. The method for controlling the automation process includes: acquiring a task operation instruction in the automation process; determining, according to the task operation instruction, whether a lidding/delidding operation is included in a task operation corresponding to the task operation instruction; in response to the lidding/delidding operation being included, performing task deduction of the task operation, which includes: determining, according to a lidding/delidding operation execution position parameter instruction included in the task operation instruction, whether an execution position of the lidding/delidding operation is a starting position and/or a destination position of a transfer operation, and continuing, based on a determination result, to perform task deduction of a corresponding task operation to obtain a task deduction result, where deduction of performing the lidding/delidding operation at the starting position and/or the destination position is prioritized; and determining, based on the task deduction result, whether to perform the task operation

In an embodiment, the determining, according to a lidding/delidding operation execution position parameter instruction included in the task operation instruction, whether an execution position of the lidding/delidding operation is a starting position and/or a destination position of a transfer operation, and continuing, based on a determination result, to perform task deduction of a corresponding task operation includes: determining whether the execution position of the delidding operation is the starting position, and determining to perform the delidding operation at the starting position in response to the execution position of the delidding operation being the starting position; determining whether the execution position of the lidding operation is the destination position, and determining to perform the lidding operation at the destination position in response to the execution position of the lidding operation being the destination position; and determining whether the execution position of the lidding operation is the starting position and whether the execution position of the delidding operation is the destination position, and continuing task deduction by using different task channels based on a second determination result.

In an embodiment, the determining whether the execution position of the lidding operation is the starting position and whether the execution position of the delidding operation is the destination position, and continuing task deduction by using different task channels based on a second determination result includes: performing, in response to the second determination result meeting a first condition, task deduction by using a first task channel, where the first task channel includes one or more of task operations in sequence: performing the lidding operation at the starting position, a code scanning operation, and placing a transfer object subject to the transfer operation to the destination position, where the first condition includes: the execution position of the lidding operation being the starting position, the code scanning operation not being performed during the execution of the transfer operation or the code scanning operation being performed after the lidding operation, and the delidding operation not being performed or the execution position of the delidding operation not being the destination position

In an embodiment, the determining whether the execution position of the lidding operation is the starting position and whether the execution position of the delidding operation is the destination position, and continuing task deduction by using different task channels based on a second determination result includes: performing, in response to the second determination result meeting a second condition, task deduction by using a second task channel, where the second task channel includes one or more of task operations in sequence: grabbing the transfer object subject to the transfer operation, the code scanning operation, and performing the delidding operation at the destination position; and where the second condition includes: the execution position of the delidding operation being the destination position, the code scanning operation not being performed during the execution of the transfer operation or the code scanning operation being performed before the delidding operation, and the lidding operation not being performed or the execution position of the lidding operation not being the starting position.

In an embodiment, the determining whether the execution position of the lidding operation is the starting position and whether the execution position of the delidding operation is the destination position, and continuing task deduction by using different task channels based on a second determination result includes: performing, in response to the second determination result not meeting the first condition and the second condition, task deduction by using a third task channel, where the third task channel includes one or more of task operations in sequence: grabbing the transfer object from the starting position of the transfer operation, the delidding operation, the code scanning operation, the lidding operation, and placing the transfer object subject to the transfer operation to the destination position.

In an embodiment, the task operation instruction includes a transfer task operation instruction, and the transfer task operation includes a transfer operation and the lidding/delidding operation, and the performing task deduction of the task operation further includes: acquiring a first parameter for the lidding/delidding operation, an operation of releasing the transfer object subject to the transfer operation, and/or an operation of grabbing the transfer object, where a parameter in the task operation instruction includes the first parameter, and the first parameter includes information of a gripping orientation and/or a gripping height for a lid and/or the transfer object at a first position; and deducing a second parameter according to the task operation instruction and a parameter prestored in the transfer operation execution device, where the second parameter is information of a gripping orientation and/or a gripping height for the lid and/or the transfer object at a second position except for the first position.

In an embodiment, the task deduction result includes execution parameters of multiple atomic operations in the task operation, and the method further includes: performing the multiple atomic operations in serial or in parallel during the execution of the automation process.

In an embodiment, a parameter in the task operation instruction includes a lidding/delidding operation parameter, and the lidding/delidding operation parameter includes any one or more of: the execution position of the lidding/delidding operation, a lid placing position after the delidding operation, a lid picking position before the lidding operation, a gripping orientation for an operation object at the starting position and/or the destination position of the task operation, and a gripping height for the operation object at the starting position and/or the destination position of the task operation.

According to a third aspect of the present disclosure, an apparatus for controlling an automation system is further provided. The apparatus for controlling the automation system includes a first determination module, a first judgment module, a second determination module, and an instruction sending module.

The first determination module is configured to determine, in response to an operation of a user, whether a lidding/delidding operation is included in an automation process.

The first judgment module is configured to determine, in response to the lidding/delidding operation being included, whether a starting position and/or a destination position of a task operation in the automation process supports the lidding/delidding operation.

The second determination module is configured to determine, in response to a first determination result being that the starting position and/or the destination position of the task operation in the automation process supports the lidding/delidding operation, the starting position and/or the destination position as an execution position of the lidding/delidding operation.

The instruction sending module is configured to send a task operation instruction in the automation process to a transfer operation execution device, to cause the transfer operation execution device to perform task deduction according to the task operation instruction, where the task operation instruction includes a transfer operation instruction and a lidding/delidding operation execution position parameter instruction.

According to a fourth aspect of the present disclosure, an apparatus for controlling an automation process is provided. The apparatus for controlling the automation process includes an instruction acquisition module, a second judgment module, a task deduction module, and a third determination module.

The instruction acquisition module is configured to acquire a task operation instruction in the automation process.

The second judgment module is configured to determine, according to the task operation instruction, whether a lidding/delidding operation is included in a task operation corresponding to the task operation instruction.

The task deduction module is configured to perform, in response to the lidding/delidding operation being included, task deduction of the task operation, which includes: determining, according to a lidding/delidding operation execution position parameter instruction included in the task operation instruction, whether an execution position of the lidding/delidding operation is a starting position and/or a destination position of a transfer operation, and continuing, based on a determination result, to perform task deduction of a corresponding task operation to obtain a task deduction result, where deduction of performing the lidding/delidding operation at the starting position and/or the destination position is prioritized.

The third determination module, configured to determine, based on the task deduction result, whether to perform the task operation.

According to a fifth aspect of the present disclosure, an electronic device is further provided. The electronic device includes a processor and a memory. The memory stores computer program instructions, and the computer program instructions, when being executed by the processor, perform the method for controlling the automation system as described above and/or the method for controlling the automation process as described above.

According to a sixth aspect of the present disclosure, a storage medium is further provided. The storage medium stores program instructions. The program instructions, when being executed, perform the method for controlling the automation system as described above and/or the method for controlling the automation process as described above.

In the above-described technical solution, in the case that the lidding/delidding operation is included in the task operation and the starting position and/or the destination position of the task operation supports the lidding/delidding operation, a priority is set to determine the starting position and/or the destination position as the execution position of the lidding/delidding operation, so that the transfer operation execution device performs task deduction according to the task operation instruction. Therefore, the execution time consumption of the lidding/delidding operation is reduced, and the execution efficiency of the task operation is effectively improved.

The above description is merely an overview of the technical solutions of the present disclosure. Embodiments of the present disclosure are described hereinafter in order for a clear understanding of the technical solutions of the present disclosure so as to implement the technical solutions based on the specification, and further for a clear and easy understanding of the above and other objectives, features and advantages of the present disclosure.

### BRIEF DESCRIPTION OF THE DRAWINGS

Above and other objects, features, and advantages of the present disclosure will become more apparent with reference to the detailed description of the embodiments of the present disclosure made in conjunction with the drawings. The drawings are intended to provide further understanding of the embodiments of the present disclosure, and constitute a part of the specification. The drawings are intended to describe the present disclosure in conjunction with the embodiments of the present disclosure, and do not limit the present disclosure. In the drawings, same reference numerals generally represent same parts or steps.
FIG. 1 illustrates a flowchart of a method for controlling an automation system according to an embodiment of the present disclosure;
FIG. 2 illustrates a flowchart of a method for controlling an automation process according to an embodiment of the present disclosure;
FIG. 3 illustrates a schematic diagram of a well plate according to an embodiment of the present disclosure;
FIG. 4 illustrates a flowchart of continuing to perform task deduction by using different task channels based on a second determination result according to an embodiment of the present disclosure;
FIG. 5 illustrates a schematic block diagram of an apparatus for controlling an automation system according to an embodiment of the present disclosure;
FIG. 6 illustrates a schematic block diagram of an apparatus for controlling an automation process according to an embodiment of the present disclosure; and
FIG. 7 illustrates a schematic block diagram of an electronic device according to an embodiment of the present disclosure.

### DETAILED DESCRIPTION

Exemplary embodiments of the present disclosure are described in detail with reference to the drawings to make objects, technical solutions, and advantages of the present disclosure more apparent. Apparently, the described embodiments are only a part of the embodiments instead of all embodiments of the present disclosure. It should be understood that, the present disclosure is not limited by the exemplary embodiments described herein. Based on the embodiments of the present disclosure described herein, all other embodiments obtained by those skilled in the art without creative efforts are deemed to fall into the protection scope of the present disclosure.

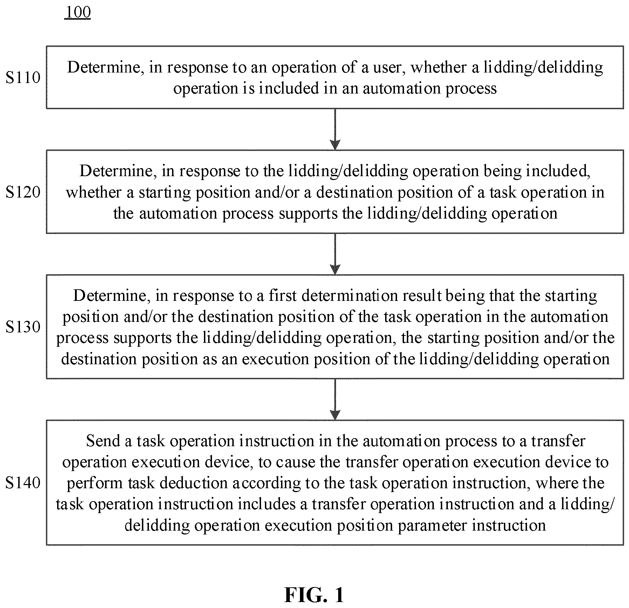

In order to solve the above technical problems, according to a first aspect of the present disclosure, a method for controlling an automation system is provided. FIG. 1 illustrates a flowchart of a method 100 for controlling an automation system according to an embodiment of the present disclosure. As shown in FIG 1, the method 100 for controlling the automation system may include the following steps S110 to S140.

In step S110, in response to an operation of a user, it is determined whether a lidding/delidding operation is included in an automation process.

In an embodiment, a user drags an identifier corresponding to a lidding/delidding operation to an automation process display area of a host computer based on a demand for constructing the automation process to construct an automation process. In response to a dragging action by the user for the identifier of the lidding/delidding operation, it is determined that the automation process includes the lidding/delidding operation. Otherwise, if the identifier of the lidding/delidding operation is not dragged to the automation process display area of the host computer in the process of constructing the automation process, it is determined that the automation process does not include the lidding/delidding operation.

In step S120, in response to the lidding/delidding operation being included, it is determined whether a starting position and/or a destination position of a task operation in the automation process supports the lidding/delidding operation.

In an embodiment, in response to the lidding/delidding operation being included, the automation system determines whether a starting position and a destination position of a task operation in a task operation instruction including a lidding/delidding operation instruction supports the lidding/delidding operation. Specifically, it is determined whether the starting position and/or the destination position supports the lidding/delidding operation based on information of a device corresponding to the starting position and/or the destination position of the task operation. For example, the information of the device includes a plate position parameter of the device, such as a plate position height. For the convenience of description, an example of the lidding operation is described as follows. First, it is determined whether the plate position height of the device corresponding to the starting position meets the condition for performing the lidding operation. In a case that the plate position height of the device corresponding to the starting position meets the execution condition for performing the lidding operation, it is determined that the starting position of the task operation in the automation process supports the lidding operation. In a case that the plate position height of the device corresponding to the starting position does not meet the execution condition for performing the lidding operation, it is determined that the starting position of the task operation in the automation process does not support the lidding operation. Next, it is determined whether the plate position height of the device corresponding to the destination position meets a condition for performing the delidding operation. In a case that the plate position height of the device corresponding to the destination position meets the execution condition for performing the delidding operation, it is determined that the destination position of the task operation in the automation process supports the delidding operation. In a case that the plate position height of the device corresponding to the destination position does not meet the execution condition for performing the delidding operation, it is determined that the destination position of the task operation in the automation process does not support the delidding operation.

It can be understood that the reason why the plate position height serves as a condition for determining whether the starting position or the destination position supports the lidding/delidding operation is that: for example, if the plate position height is insufficiently high, when a robotic arm performs delidding, the robotic arm fails to move upward after grabbing a lid, and thus fails to completely perform the delidding operation.

In step S130, when a first determination result is that the starting position and/or the destination position of the task operation in the automation process supports the lidding/delidding operation, the starting position and/or the destination position are determined as an execution position of the lidding/delidding operation.

In an embodiment, based on the first determination result of step S120, in the case that the starting position and/or the destination position of the task operation in the automation process supports the lidding/delidding operation, the user sets a priority for determining the starting position and/or the destination position as the execution position of the lidding/delidding operation via an input apparatus(e.g., a mouse, a keyboard) of the host computer within a user interface provided by the host computer. The host computer also automatically set a priority for determining the starting position and/or the destination position as the execution position of the lidding/delidding operation based on a preset parameter in the automation system.

In step S140, a task operation instruction in the automation process is sent to a transfer operation execution device, causing the transfer operation execution device to perform task deduction according to the task operation instruction. The task operation instruction includes a transfer operation instruction and a lidding/delidding operation execution position parameter instruction.

In an embodiment, the automation system automatically issues the task operation instruction in the automation process, such as the transfer operation instruction and the lidding/delidding operation execution position parameter instruction, to the transfer operation execution device. For example, the transfer operation execution device includes a robotic arm, a lid suction device, a code scanner, and the like. Optionally, a "Confirmation" control is included in a visual interface of the host computer. After the user clicks on the "Confirmation" control via an input apparatus of the host computer, the host computer issues the task operation instruction in the automation process to the transfer operation execution device, so that the transfer operation execution device performs task deduction according to the task operation instruction.

In the above-described technical solution, in the case that the lidding/delidding operation is included in the task operation and the starting position and/or the destination position of the task operation supports the lidding/delidding operation, a priority is set to determine the starting position and/or the destination position as the execution position of the lidding/delidding operation, so that the transfer operation execution device performs task deduction according to the task operation instruction. Therefore, the execution time consumption of the lidding/delidding operation is reduced, and the execution efficiency of the task operation is effectively improved.

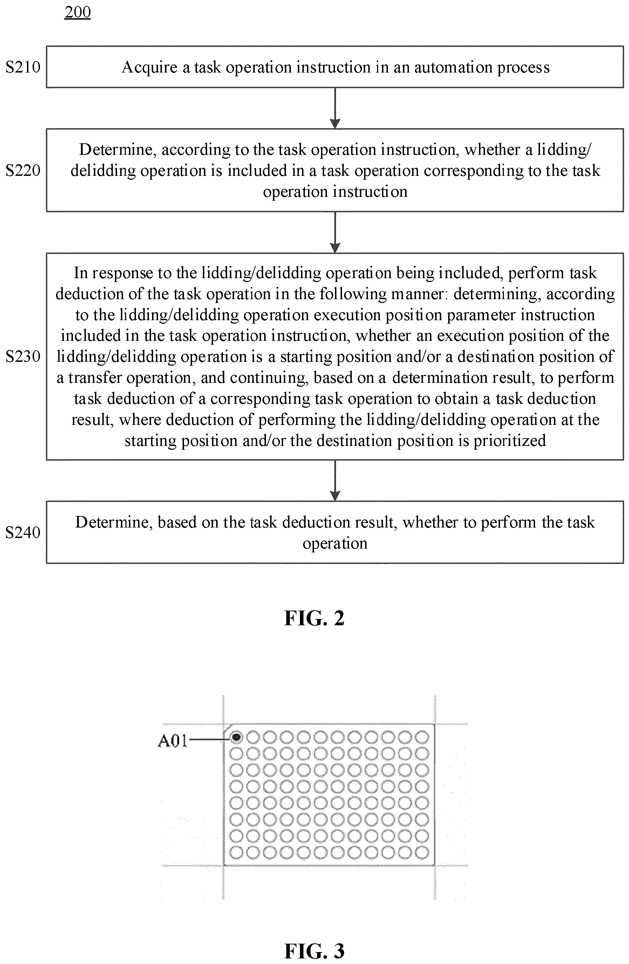

According to a second aspect of the present disclosure, a method for controlling an automation process is further provided. FIG. 2 illustrates a flowchart of a method 200 for controlling an automation process according to an embodiment of the present disclosure. As shown in FIG. 2, the method 200 for controlling an automation process may include the following steps S210 to S240.

In step S210, a task operation instruction in the automation process is acquired.

In an embodiment, the task operation instruction is prestored in a storage apparatus of a host computer. A transfer operation execution device such as a robotic arm acquires the task operation instruction from the host computer.

In step S220, according to the task operation instruction, it is determined whether a lidding/delidding operation is included in a task operation corresponding to the task operation instruction.

In an embodiment, based on the task operation instruction acquired in the above-described step S210, the task operation corresponding to the task operation instruction may be one or more task operations. For example, a task operation corresponding to a current task operation instruction includes one or more of a transfer operation, a code scanning operation, or a lidding/delidding operation. A driving apparatus of the robotic arm determines whether the task operation corresponding to the task operation instruction includes a lidding/delidding operation.

In step S230, in response to the lidding/delidding operation being included, task deduction of the corresponding task operation is performed in the following manner: determining, according to a lidding/delidding operation execution position parameter instruction included in the task operation instruction, whether an execution position of the lidding/delidding operation is a starting position and/or a destination position of a transfer operation, and continuing, based on a determination result, to perform task deduction of a corresponding task operation to obtain a task deduction result. Deduction of performing the lidding/delidding operation at the starting position and/or the destination position is prioritized.

If it is determined that a lidding/delidding operation is included in the task operation instruction in step S220, task deduction of the task operation may be performed in the driving apparatus of the transfer operation execution device based on a parameter in the task operation instruction. The task deduction may refer to a procedure of decomposing the task operation instruction into a series of atomic operations. The task operation instruction may include a transfer task operation instruction and a lidding/delidding operation execution position parameter instruction. For example, the parameter in the task operation instruction includes a lidding/delidding operation parameter, and the lidding/delidding operation parameter includes any one or more of the following parameters: an execution position of the lidding/delidding operation, a lid placing position after the delidding operation, a lid picking position before the lidding operation, a gripping orientation for an operation object at the starting position and/or the destination position of the task operation, and a gripping height for the operation object at the starting position and/or the destination position of the task operation. For example, a parameter in the transfer task operation instruction includes one or more of the following parameters: coordinate information of the starting position of the transfer operation, coordinate information of the destination position of the transfer operation, a parameter of an operation during the transfer operation, a gripping height for a transfer object subject to the transfer operation, and a gripping orientation for the transfer object. Specifically, the execution position of the lidding/delidding operation may be a device A or a device B. A lid placing position after the delidding operation and the lid picking position before the lidding operation may be specific position coordinates in the automation system. For example, the lid placing position after the delidding operation may be location E01 in a device E. For example, an operation object subject to the task operation may be a well plate. The gripping orientation for the well plate includes: an orientation in which the robotic arm grabs the well plate from a narrow side of the well plate, an orientation in which the robotic arm grabs the well plate from a wide side of the well plate, and the like. The gripping height for the well plate includes: a minimum or maximum offset for grabbing the well plate from the narrow side of the well plate, a minimum or maximum offset for grabbing the well plate from the wide side of the well plate, and the like. In the above-described technical solution, the parameter in the task operation instruction includes the above-described lidding/delidding operation parameter, which allows for making an accurate determination about whether the execution position of the lidding/delidding operation by the driving apparatus of the transfer operation execution device is the starting position and/or the destination position of the transfer operation, and thus ensures accuracy of a task deduction result. Based on the above-described one or more parameters, it may be determined whether an execution position of the lidding/delidding operation in the current task operation instruction is the starting position and/or the destination position of the transfer operation, and based on a determination result, task deduction of the corresponding task operation continues to be performed to obtain a task deduction result. If the starting position of the transfer operation is the device A and the execution position of the lidding operation is also the device A, it is determined that the execution position of the lidding operation is the starting position. If the starting position of the transfer operation is the device B and the execution position of the lidding operation is the device A, it may be determined that the execution position of the lidding operation is not the starting position. Similarly, the destination position can be determined in the same manner. In a case that the determination result is that the execution position of the lidding/delidding operation is the starting position and/or the destination position of the transfer operation, multiple atomic operations included in the task deduction result may include: performing the lidding operation on the transfer object at the starting position of the transfer operation, performing a grabbing operation on the transfer object after completion of the lidding operation, performing the transfer operation on the transfer object from the starting position to a position where a lid is situated, performing a gripping operation by the robotic arm on the lid, performing the transfer operation on the transfer object from the position where the lid is situated to the destination position of the transfer operation, performing a release operation on the transfer object at the destination position, and performing the delidding operation on the transfer object. Each atomic operation is performed by at least one execution device. For example, the atomic operation of performing the grabbing operation on the transfer object at the starting position of the transfer operation is performed by a robotic arm, specifically by a robotic gripper of the robotic arm.

In step S240, it is determined whether to perform the task operation based on the task deduction result.

In an embodiment, based on the task deduction result obtained in step S230, the driving apparatus of the robotic arm determines whether the multiple atomic operations in the task deduction result can be smoothly performed. In response to the task deduction result indicating that the multiple atomic operations can be performed smoothly, it is determined that the corresponding task operation is performed. Otherwise, in response to the task deduction result indicating that the multiple atomic operations cannot be performed smoothly, the task operation is not performed.

According to the above technical solution, before the task operation instruction is executed, the task deduction is performed for the task operation instruction. Before the task deduction, it is first determined whether the task operation corresponding to the task operation instruction includes a lidding/delidding operation. As a result, the task deduction may be performed for the task operation instruction in a case that the lidding/delidding operation is included. This effectively ensures that the task operation can be performed smoothly, and avoids failing to perform the task operation properly due to diversity of the relevant parameters of the task operation. Further, accuracy of an execution result of the task operation is ensured, and accuracy of an execution result of subsequent operations of the task operation in the automation process is ensured.

In an embodiment, the task operation instruction includes the transfer task operation instruction. A transfer task operation includes a transfer operation and a lidding/delidding operation. The performing task deduction of the corresponding task operation further includes: acquiring a first parameter for the lidding/delidding operation, an operation of releasing the transfer object subject to the transfer operation, and/or an operation of grabbing the transfer object. The parameter in the task operation instruction includes a first parameter, and the first parameter includes information of a gripping orientation and/or a gripping height for the lid and/or the transfer object at a first position. A second parameter is deduced according to the task operation instruction and a parameter prestored in the transfer operation execution device. The second parameter is information of the gripping orientation and/or the gripping height for the lid and/or the transfer object at a second position except for the first position.

In an embodiment, the task operation instruction is a transfer task operation instruction, and the transfer task operation in the transfer task operation instruction includes the transfer operation and the lidding/delidding operation. The task operation instruction acquired by the automation system includes the first parameter, that is, information of a gripping orientation and/or a gripping height for the lid and/or the transfer object at the first position. The first position may be the starting position or the destination position of the transfer operation. The transfer object subject to the transfer operation may be a lid, a well plate, and the like. To facilitate description and understanding, an example that the transfer object is a well plate is described as follows. FIG. 3 illustrates a schematic diagram of a well plate according to an embodiment of the present disclosure. Referring to FIG. 3, A01 represents an aperture in the well plate. The gripping orientation of the transfer object includes: an orientation in which a robotic arm grabs the well plate from a narrow side distant from the aperture A01, an orientation in which the robotic arm grabs the well plate from a wide side distant from the aperture A01, an orientation in which the robotic arm grabs the well plate from a narrow side proximate to the aperture A01, an orientation in which the robotic arm grabs the well plate from a wide edge proximate to the aperture A01, and the like.

In another embodiment, a second parameter is further deduced according to the task operation instruction and a parameter prestored in the transfer operation execution device. The second parameter is information of the gripping orientation and/or the gripping height for the lid and/or the transfer object at a second position except for the first position. The second position, that is, in addition to the starting position and the destination position, may be an adjustment position, a code scanning position, and the like. For example, the parameter prestored in the transfer operation execution device includes: a position parameter of a code scanner, a scanning range of the code scanner, a position parameter of the adjustment position, and the like. At the second position, the gripping height and the gripping orientation for the lid by the execution device of the lidding/delidding operation and the gripping height and the gripping orientation for the transfer object, such as a well plate, by the execution device of the code scanning operation, are automatically calculated by the driving apparatus of the transfer operation execution device according to the task operation instruction and the parameter prestored in the transfer operation execution device.

In the above-described technical solution, relevant task deduction may be directly performed based on the first parameter in the case that the first parameter is included in the task operation instruction. In the case that the second parameter is not included in the task operation instruction, the second parameter may be calculated according to the task operation instruction and the parameter prestored in the transfer operation execution device, and then task deduction of a relevant task operation is performed based on the calculated second parameter. As a result, it is not required to set a large number of parameters in a task operation instruction, and parameter errors due to human causes are avoided. In addition, the automation degree of performing the task operation is increased, and the execution efficiency of the task operation is improved.

In an embodiment, the task deduction result includes execution parameters of multiple atomic operations in the task operation. The method 200 for controlling the automation process further includes: performing the multiple atomic operations in serial or in parallel in the execution of the automation process.

In an embodiment, it is assumed that the task operation is a transfer operation of transferring a well plate from the device A to the device B and then to a device C. A delidding operation is added to the transfer process from the device A to the device B. Therefore, in a task deduction result obtained by performing task deduction for this task operation instruction, multiple atomic operations are included: transfer operation 1 of transferring the well plate from the device A to the device B by the robotic arm, a transfer operation 2 of transferring the well plate from the device B to the device C by the robotic arm, and the delidding operation of a lid suction device. It can be understood that since execution devices of the transfer operation 1 and the transfer operation 2 may be the same robotic arm or different robotic arms. In a case that a same robotic arm serves as the execution device for performing the two transfer operations, the two transfer operations cannot be performed in parallel due to differences in parameters such as the starting positions and the destination positions of the two transfer operations. That is, the two transfer operations are performed in serial. In the case that the execution devices of the two transfer operations are different robotic arms, if the two robotic arms perform the transfer operations at the same time, a safety accident such as a collision of the robotic arms may occur. Preferably, the two transfer operations are performed in serial. An execution device for the delidding operation is the lid suction device. Apparently, the lid suction device and the robotic arm are different execution devices. Moreover, since no safety accident such as collision will occur when the two execution devices perform the specific operations, the delidding operation of the lid suction device and the transfer operation 1 may be performed in parallel in order to reduce time consumption and improve operation execution efficiency.

In the above-described technical solution, the multiple atomic operations may be reasonably performed in serial or in parallel according to practice. As a result, not only the smooth execution of the task operation is ensured, but also the execution efficiency of the task operation is improved.

In an embodiment, according to a lidding/delidding operation execution position parameter instruction included in the task operation instruction, it is determined whether an execution position of the lidding/delidding operation is a starting position and/or a destination position of a transfer operation, and based on a determination result, task deduction of the corresponding task operation continues to be performed. The determination process may include the following three cases.

In a first case, it is determined whether the execution position of the delidding operation is the starting position. In response to the execution position of the delidding operation being the starting position, it is determined that the delidding operation is performed at the starting position.

In an embodiment, based on the lidding/delidding operation execution position parameter in the lidding/delidding operation execution position parameter instruction, it is determined whether the execution position of the delidding operation is the starting position of the transfer operation. For example, a parameter relating to the delidding operation in the lidding/delidding operation execution position parameter indicates that the execution position of the delidding operation is the device A. It is determined that the starting position of the transfer operation is also the device A based on the relevant parameter in the transfer operation instruction. The execution position of the delidding operation is identical to the starting position of the transfer operation, that is, the positions are both the device A. Thus, it is determined that the execution position of the delidding operation is the starting position of the transfer operation. Otherwise, the parameter relating to the delidding operation in the lidding/delidding operation execution position parameter indicates that the execution position of the delidding operation is the device C. It is determined that the starting position of the transfer operation is the device A based on the relevant parameter in the transfer operation instruction. The execution position of the delidding operation is different form the starting position of the transfer operation, and thus it is determined that the execution position of the delidding operation is not the starting position of the transfer operation. In a case that the execution position of the delidding operation is the starting position, it is determined that the delidding operation is performed at the starting position.

In a second case, it is determined whether the execution position of the lidding operation is the destination position. In response to the execution position of the lidding operation being the destination position, it is determined that the lidding operation is performed at the destination position.

In an embodiment, based on a lidding/delidding operation execution position parameter in the lidding/delidding operation execution position parameter instruction, it is determined whether the execution position of the lidding operation is the destination position of the transfer operation. For example, a parameter relating to the lidding operation in the lidding/delidding operation execution position parameter indicates that the execution position of the lidding operation is the device B. It is determined that the destination position of the transfer operation is also the device B based on a relevant parameter in the transfer operation instruction. The execution position of the lidding operation is identical to the destination position of the transfer operation, that is, the positions are both the device B. Thus, it is determined that the execution position of the lidding operation is the destination position of the transfer operation. Otherwise, the parameter relating to the lidding operation in the lidding/delidding operation execution position parameter indicates that the execution position of the lidding operation is a device D. It is determined that the destination position of the transfer operation is the device B based on the relevant parameter in the transfer operation instruction. The execution position of the lidding operation is different form the destination position of the transfer operation, and thus it is determined that the execution position of the lidding operation is not the destination position of the transfer operation. In a case that the execution position of the lidding operation is the destination position, it is determined that the lidding operation is performed at the destination position.

In a third case, it is determined whether the execution position of the lidding operation is the starting position and whether the execution position of the delidding operation is the destination position, and based on a second determination result, task deduction continues to be performed by using different task channels.

In an embodiment, multiple second determination results may be obtained by determining whether the execution position of the lidding operation is the starting position and whether the execution position of the delidding operation is the destination position. Different second determination results may correspond to different task channels. For example, in addition to the first and second cases described above, the second determination result is further obtained, which may indicating that the execution position of the lidding operation is the starting position, or that the execution position of the delidding operation is the destination position. It can be understood that the execution position of the delidding operation may also be the adjustment position, and the execution position of the lidding operation may also be the adjustment position. Based on the different second determination results, task deduction may continue to be performed by using the different task channels.

In the above-described technical solution, it is determined whether the execution position of the lidding/delidding operation is the starting position and/or the destination position of the transfer operation according to the lidding/delidding operation execution position parameter instruction included in the task operation instruction. Thus, task deduction may be performed in a targeted manner based on different second determination results, and the efficiency of the task deduction is improved.

In an embodiment, for the third case described above, the determining whether the execution position of the lidding operation is the starting position and whether the execution position of the delidding operation is the destination position, and continuing task deduction by using different task channels based on a second determination result includes: in response to the second determination result meeting a first condition, performing task deduction by using a first task channel. The first task channel includes one or more of the following task operations in sequence: performing the lidding operation at the starting position, a code scanning operation, and placing a transfer object subject to the transfer operation to the destination position. The first condition includes: the execution position of the lidding operation being the starting position, the code scanning operation not being performed during the execution of the transfer operation or the code scanning operation being performed after the lidding operation, and the delidding operation not being performed or the execution position of the delidding operation not being the destination position.

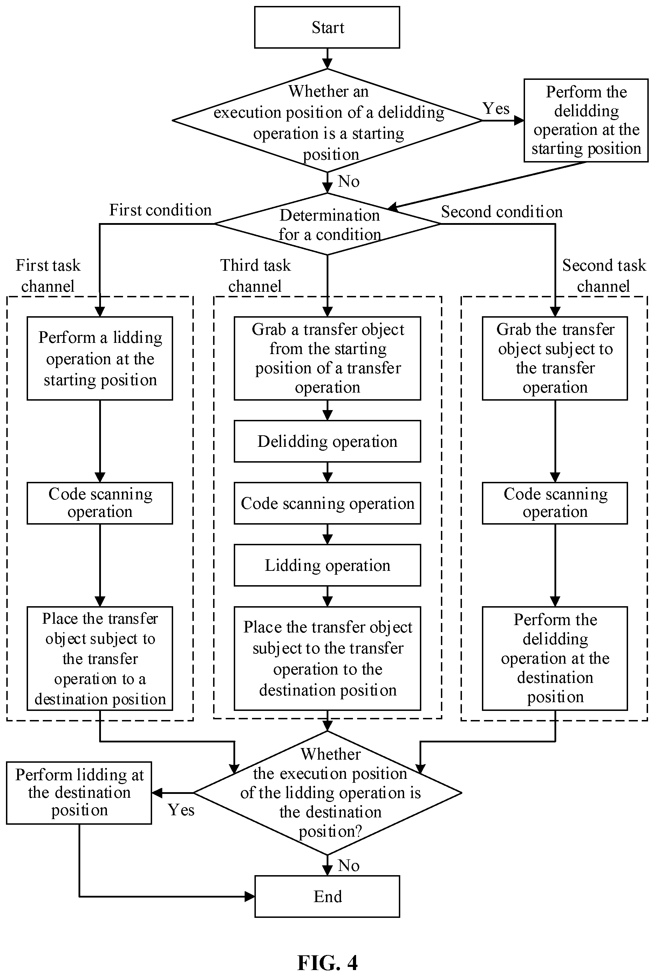

In an embodiment, the task operation instruction includes a transfer operation instruction. A transfer object subject to a transfer operation corresponding to the transfer operation instruction may be a well plate, and the execution device of the transfer operation may be a robotic arm. An execution device of the lidding/delidding operation may be a lid suction device, a robotic arm, or the like. Facilitating description and understanding, an example that the execution device of the lidding/delidding operation is a robotic arm is described as follows. FIG. 4 illustrates a flowchart of continuing to perform task deduction by using different task channels based on a second determination result according to an embodiment of the present disclosure. As shown by the first task channel in FIG. 4, in the case that the second determination result meets the first condition, that is, the execution position of the lidding operation is the starting position, the code scanning operation is not performed during the execution of the transfer operation or the code scanning operation is performed after the lidding operation, and the delidding operation is not performed or the execution position of the delidding operation is not the destination position, a task deduction result is obtained by performing task deduction using the first task channel. The delidding operation not being performed or the execution position of the delidding operation not being the destination position in the first condition indicates that the delidding operation is not performed during the entire transfer operation, or the execution position of the delidding operation may be a position other than the destination position, such as the starting position or the adjustment position. In a specific embodiment, the first task channel includes the following task operations in sequence: performing the lidding operation at the starting position, a code scanning operation, and placing the transfer object subject to the transfer operation to the destination position. By performing task deduction on the lidding operation performed at the starting position, a part of the task deduction result is obtained as follows, that is, a first sequential atomic operation, including: the robotic arm moving from a safe position to a lid picking position and gripping a lid, the robotic arm transferring the lid to the starting position of the transfer operation, the robotic arm releasing the lid onto the well plate, and the robotic arm returning to the safe position. It can be understood that a transfer operation for the well plate may be included between the lidding operation and the code scanning operation. Specifically, by performing task deduction on the transfer operation for the well plate, a second sequential atomic operation is obtained, including: the robotic arm moving from the safe position to the starting position, the robotic arm gripping the well plate at the starting position, and the robotic arm gripping the well plate and transferring the well plate to a position where the code scanner is situated. By performing task deduction on the code scanning operation, a third sequential atomic operation is obtained, including: the robotic arm releasing the well plate to a code scanning position of the code scanner, the code scanner performing the code scanning operation, and the robotic arm gripping the well plate at the code scanning position of the code scanner. By performing task deduction on the operation of placing the transfer object subject to the transfer operation to the destination position, a fourth sequential atomic operation is obtained, including: the robotic arm transferring the well plate from the code scanning position to the destination position, the robotic arm releasing the well plate to the destination position, and the robotic arm returning to the safe position. Preferably, other operations are further performed for the well plate which is at the starting position after the lidding operation at the starting position, such as a transfer operation, a code scanning operation, and so on. Therefore, in order to improve the execution efficiency of the task operation, "the robotic arm returning to the safe position" in the first sequential atomic operation may be ignored or deleted. Similarly, an unnecessary operation may also be reasonably deleted, for example, "the robotic arm moving from the safe position to the starting position" in the second sequential atomic operation described above. As a result, a task deduction result obtained according to the above-described solution includes: the robotic arm moving from the safe position to the lid placing position and gripping the lid, the robotic arm transferring the lid to the starting position of the transfer operation, the robotic arm releasing the lid onto the well plate, the robotic arm gripping the well plate at the starting position, the robotic arm transferring the well plate to the position where the code scanner is situated, the robotic arm releasing the well plate to the code scanning position of the code scanner, the code scanner performing a code scanning operation, the robotic arm gripping the well plate at the code scanning position of the code scanner, the robotic arm transferring the well plate from the code scanning position to the destination position, the robotic arm releasing the well plate to the destination position, and the robotic arm returning to the safe position.

**In** the above-described technical solution, in the case that the lidding operation is supported at the starting position and the first condition is met, task deduction is performed by using the first task channel, without setting a separate position, such as an adjustment position, for the lidding operation. In addition, after "the robotic arm releasing the lid onto the well plate" in the lidding operation is implemented, the robotic arm directly grips the well plate at the starting position for subsequent operations without the two unnecessary operations of returning to the safe position and returning to the starting position from the safe position. Thereby, the task deduction result is simplified, and the execution efficiency of the task operation is improved.

**In** an embodiment, for the third case described above, the determining whether the execution position of the lidding operation is the starting position and whether the execution position of the delidding operation is the destination position, and continuing task deduction by using different task channels based on a second determination result further includes: in response to the second determination result meeting a second condition, performing task deduction by using a second task channel. The second task channel includes one or more of the following task operations in sequence: grabbing the transfer object subject to the transfer operation, a code scanning operation, and performing the delidding operation at the destination position. The second condition includes: the execution position of the delidding operation being the destination position, the code scanning operation not being performed during the execution of the transfer operation or the code scanning operation being performed before the delidding operation, and the lidding operation not being performed or the execution position of the lidding operation not being the starting position.

Referring again to FIG. 4, as shown by the second task channel in FIG. 4, in the case that the second determination result meets the second condition, that is, the execution position of the delidding operation is the destination position, the code scanning operation is not performed during the execution of the transfer operation or the code scanning operation is performed before the delidding operation, and the lidding operation is not performed or the execution position of the lidding operation is not the starting position, a task deduction result is obtained by performing task deduction using the second task channel. The lidding operation not being performed or the execution position of the lidding operation not being the starting position in the second condition indicates that the lidding operation is not performed during the entire transfer operation, or the execution position of the lidding operation may be a position other than the starting position, such as the destination position or the adjustment position. In a specific embodiment, the second task channel includes the following task operations in sequence: grabbing the transfer object subject to the transfer operation, a code scanning operation, and performing the delidding operation at the destination position. By performing task deduction on the operation of grabbing the transfer object subject to the transfer operation, a part of the task deduction result is obtained as follows, that is, a fifth sequential atomic operation, including: the robotic arm moving from the safe position to the starting position of the transfer operation, and the robotic arm gripping the well plate from the starting position. It can be understood that a transfer operation for the well plate may be included between the transfer operation and the code scanning operation. Specifically, by performing task deduction on the transfer operation for the well plate, a sixth atomic operation is obtained, including: the robotic arm transferring the well plate from the starting position to the position where the code scanner is situated. By performing task deduction on the code scanning operation, a seventh sequential atomic operation is obtained, including: the robotic arm releasing the well plate to the code scanning position of the code scanner, the code scanner performing the code scanning operation, and the robotic arm returning to a safe position. It can be understood that a transfer operation for the well plate may be included between the code scanning operation and the delidding operation. Specifically, by performing task deduction on the transfer operation, an eighth sequential atomic operation is obtained, including: the robotic arm moving from the safe position to the position where the code scanner is situated, the robotic arm gripping the well plate at the code scanning position of the code scanner, the robotic arm gripping the well plate and transferring the well plate to the destination position. By performing task deduction on the operation of performing the delidding operation at the destination position, a ninth sequential atomic operation is obtained, including: the robotic arm releasing the well plate to the destination position, the robotic arm returning to the safe position, the robotic arm moving from the safe position to the destination position, the robotic arm gripping the lid at the destination position, the robotic arm transferring the lid to the lid placing position, the robotic arm releasing the lid to the lid placing position, and the robotic arm returning to the safe position. It can be understood that, in order to improve the execution efficiency of the task operation, "the robot arm returning to the safe position" in the seventh sequential atomic operation, "the robot arm returning to the safe position" and "the robot arm moving from the safe position to the destination position" in the ninth sequential atomic operation may be ignored or deleted. Similarly, an unnecessary operation may be reasonably deleted. As a result, a task deduction result obtained according to the above-described solution includes: the robotic arm moving from the safe position to the starting position of the transfer operation, the robotic arm gripping the well plate from the starting position, the robotic arm transferring the well plate to the position where the code scanner is situated, the robotic arm releasing the well plate to the code scanning position of the code scanner, the code scanner performing the code scanning operation, the robotic arm gripping the well plate at the code scanning position, the robotic arm transferring the well plate to the destination position, the robotic arm releasing the well plate to the destination position, the robotic arm gripping the lid from the destination position, the robotic arm transferring the lid to the lid placing position, the robotic arm releasing the lid to the lid placing position, and the robotic arm returning to the safe position.

In the above-described technical solution, in the case that the delidding operation is supported at the destination position and the second condition is met, the task deduction is performed by using the second task channel without setting a separate position, such as an adjustment position, for the delidding operation. In addition, in the case of "the robotic arm releasing the lid onto the well plate" in the delidding operation, the robotic arm directly performs the delidding operation at the destination position, and then subsequent operations are performed without the two unnecessary operations of returning to the safe position and returning to the destination position from the safe position. Thereby, the task deduction result is simplified, and the execution efficiency of the task operation is improved.

In an embodiment, for the third case described above, the determining whether the execution position of the lidding operation is the starting position and whether the execution position of the delidding operation is the destination position, and continuing task deduction by using different task channels based on a second determination result further includes: in response to the second determination result meets neither the first condition nor the second condition, task deduction is performed by using a third task channel. The third task channel includes one or more of the following task operations in sequence: grabbing the transfer object from the starting position of the transfer operation, the delidding operation, the code scanning operation, the lidding operation, and placing the transfer object subject to the transfer operation to the destination position.

Referring to FIG. 4, as shown by the third task channel in FIG. 4, in the case that the second determination result meets neither the first condition nor the second condition, a task deduction result may be obtained by using the third task channel to perform task deduction. In a first embodiment, if the execution position of the lidding operation is the destination position of the task operation, the third task channel includes the following task operations in sequence: grabbing the transfer object from the starting position of the transfer operation, a delidding operation, a code scanning operation, and placing the transfer object subject to the transfer operation to the destination position. In a second embodiment, if the execution position of the delidding operation is the starting position of the task operation, the third task channel includes the following task operations in sequence: grabbing the transfer object from the starting position of the transfer operation, a code scanning operation, a lidding operation, and placing the transfer object subject to the transfer operation to the destination position. In a third embodiment, if the execution position of the delidding operation is not the starting position of the task operation and the execution position of the lidding operation is not the destination position of the task operation, the third task channel includes the following task operations in sequence: grabbing the transfer object from the starting position of the transfer operation, the delidding operation, the code scanning operation, the lidding operation, and placing the transfer object subject to the transfer operation to the destination position. The second embodiment is taken as an example for the following description. By performing task deduction on the operation of grabbing the transfer object from the starting position of the transfer operation, a part of the task deduction result is obtained as follows, that is, a tenth sequential atomic operation, including: the robotic arm moving from the safe position to the starting position, and the robotic arm gripping the well plate from the starting position. It can be understood that a transfer operation for the well plate may be included between the operation of grabbing the transfer object from the starting position of the transfer operation and the code scanning operation. Specifically, by performing task deduction on the transfer operation, an eleventh atomic operation is obtained, including: the robotic arm transferring the well plate to the position where the code scanner is situated. By performing task deduction on the code scanning operation, a twelfth sequential atomic operation is obtained, including: the robotic arm releasing the well plate to the code scanning position of the code scanner, the code scanner performing the code scanning operation, and the robotic arm gripping the well plate at the code scanning position of the code scanner. By performing task deduction on the lidding operation, a thirteenth sequential atomic operation is obtained, including: the robotic arm transferring the well plate from the code scanning position to an adjustment position, the robotic arm releasing the well plate to the adjustment position, the robotic arm returning to the safe position, the robotic arm moving from the safe position to the lid picking position, the robotic arm gripping the lid from the lid picking position, the robotic arm gripping the lid and transferring the lid to the adjustment position, the robotic arm releasing the lid onto the well plate, and the robotic arm returning to the safe position. Preferably, in order to improve the execution efficiency of the task operation, "the robotic arm returning to the safe position" and "the robotic arm moving from the safe position to the lid picking position" in the thirteenth sequential atomic operation may be ignored or deleted, and "the robotic arm moving from the adjustment position to the lid picking position" is performed after "the robotic arm releasing the well plate to the adjustment position". A transfer operation is included between the lidding operation and placing the transfer object subjected to the transfer operation to the destination position, and by performing task deduction on the transfer operation, a fourteenth sequential atomic operation is obtained, including: the robotic arm moving from the safe position to the adjustment position, the robotic arm gripping the well plate at the adjustment position, and the robotic arm moving with the gripped well plate from the adjustment position to the destination position. By performing task deduction on the operation of placing the transfer object subject to the transfer operation to the destination position, a fifteenth sequential atomic operation is obtained, including: the robotic arm releasing the well plate to the destination position, and the robotic arm returning to the safe position. It can be understood that similar unnecessary operations may be reasonably deleted according to the above-described technical solution. As a result, a task deduction result obtained according to the above-described scheme includes: the robotic arm moving from the safe position to the starting position, the robotic arm gripping the well plate from the starting position, the robotic arm transferring the well plate to the position where the code scanner is situated, the robotic arm releasing the well plate to the code scanning position of the code scanner, the code scanner performing the code scanning operation, the robotic arm gripping the well plate at the code scanning position of the code scanner, the robotic arm transferring the well plate from the code scanning position to the adjustment position, the robotic arm releasing the well plate to the adjustment position, the robotic arm moving from the adjustment position to the lid picking position, the robotic arm gripping a lid from the lid picking position, the robotic arm transferring the lid to the adjustment position, the robotic arm releasing the lid onto the well plate, the robotic arm gripping the well plate at the adjustment position, the robotic arm moving with the gripped well plate from the adjustment position to the destination position, the robotic arm releasing the well plate to the destination position, and the robotic arm returning to the safe position.

In the above-described technical solution, in the case that neither the first condition nor the second condition is met, the task deduction is performed by using the third task channel, and thus the lidding/delidding operation may be performed at the adjustment position when the lidding/delidding operation is not performed at the starting position or the destination position. Thus, the integrity of the solution is ensured, that is, in the case that the lidding/delidding operation is included in the task operation corresponding to the task operation instruction, the lidding/delidding operation can be performed smoothly. In other words, the inclusiveness and reliability of the task deduction results is ensured.

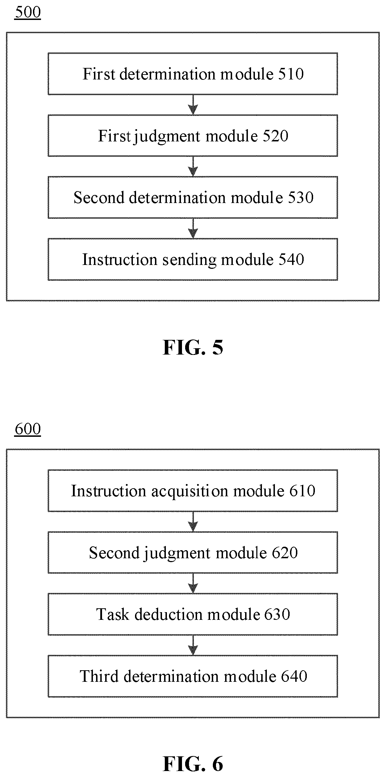

According to a third aspect of the present disclosure, an apparatus for controlling an automation system is further provided. FIG. 5 illustrates a schematic block diagram of an apparatus 500 for controlling an automation system according to an embodiment of the present disclosure. As shown in FIG. 5, the apparatus 500 includes a first determination module 510, a first judgment module 520, a second determination module 530, and an instruction sending module 540.

A first determination module 510 is configured to determine, in response to an operation of a user, whether a lidding/delidding operation is included in an automation process.

A first judgement module 520 is configured to determine, in response to the lidding/delidding operation being included, whether a starting position and/or a destination position of a task operation in the automation process supports the lidding/delidding operation.

A second determination module 530 is configured to determine, when a first determination result is that the starting position and/or the destination position of the task operation in the automation process supports the lidding/delidding operation, the starting position and/or the destination position as an execution position of the lidding/delidding operation.

The instruction sending module 540 is configured to send a task operation instruction in the automation process to a transfer operation execution device, to cause the transfer operation execution device to perform task deduction according to the task operation instruction. The task operation instruction includes a transfer operation instruction and a lidding/delidding operation execution position parameter instruction.

According to a fourth aspect of the present disclosure, an apparatus for controlling an automation process is provided. FIG. 6 illustrates a schematic block diagram of an apparatus 600 for controlling an automation process according to an embodiment of the present disclosure. As shown in FIG. 6, the apparatus 600 includes an instruction acquisition module 610, a second judgment module 620, a task deduction module 630, and a third determination module 640.

The instruction acquisition module 610 is configured to acquire a task operation instruction in the automation process.

The second judgment module 620 is configured to determine, according to the task operation instruction, whether a lidding/delidding operation is included in a task operation corresponding to the task operation instruction.

The task deduction module 630 is configured to perform, in response to the lidding/delidding operation being included, task deduction of the task operation in the following manner: determining, according to a lidding/delidding operation execution position parameter instruction included in the task operation instruction, whether an execution position of the lidding/delidding operation is a starting position and/or a destination position of a transfer operation, and continuing, based on a determination result, to perform task deduction of a corresponding task operation to obtain a task deduction result. Deduction of performing the lidding/delidding operation at the starting position and/or the destination position is prioritized.

The third determination module 640 is configured to determine, based on the task deduction result, whether to perform the task operation.

In an embodiment, the task deduction module 630 is further configured to: determine whether the execution position of the delidding operation is the starting position, and determine that the delidding operation is performed at the starting position when the execution position of the delidding operation is the starting position; determine whether the execution position of the lidding operation is the destination position, and determine that the lidding operation is performed at the destination position when the execution position of the lidding operation is the destination position; and determine whether the execution position of the lidding operation is the starting position and whether the execution position of the delidding operation is the destination position, and continues to perform task deduction by using different task channels based on the determination result.

In an embodiment, the task deduction module 630 is further configured to perform task deduction by using a first task channel when the determination result meets a first condition. The first task channel includes one or more of the following task operations in sequence: performing the lidding operation at the starting position, a code scanning operation, and placing a transfer object subject to the transfer operation to the destination position. The first condition includes: the execution position of the lidding operation being the starting position, the code scanning operation not being performed during the execution of the transfer operation or the code scanning operation being performed after the lidding operation, and the delidding operation not being performed or the execution position of the delidding operation not being the destination position.

In another embodiment, the task deduction module 630 is further configured to perform task deduction by using a second task channel when the determination result meets a second condition. The second task channel includes one or more of the following task operations in sequence: grabbing the transfer object subject to the transfer operation, a code scanning operation, and performing the delidding operation at the destination location. The second condition includes: the execution position of the delidding operation being the destination position, the code scanning operation not being performed during the execution of the transfer operation or the code scanning operation being performed before the delidding operation, and the lidding operation not being performed or the execution position of the lidding operation not being the starting position.

In another embodiment, the task deduction module 630 is further configured to perform task deduction by using a third task channel when the determination result meets neither the first condition nor the second condition. The third task channel includes one or more of the following task operations in sequence: grabbing the transfer object from the starting position of the transfer operation, the delidding operation, the code scanning operation, the lidding operation, and placing the transfer object subject to the transfer operation to the destination position.

In an embodiment, the apparatus 600 for controlling the automation process further includes a parameter acquisition module and a parameter deduction module.

The parameter acquisition module is configured to acquire a first parameter for the lidding/delidding operation, an operation of releasing the transfer object subject to the transfer operation and/or an operation of grabbing the transfer object. The parameter in the task operation instruction includes the first parameter, and the first parameter includes information of a gripping orientation and/or a gripping height for the lid and/or the transfer object at the first position.

The parameter deduction module is configured to deduce a second parameter according to the task operation instruction and a parameter prestored in the transfer operation execution device. The second parameter is information of the gripping orientation and/or the gripping height for the lid and/or the transfer object at a second position except for the first position.

In an embodiment, the apparatus 600 for controlling the automation process further includes an execution module. The execution module is configured to execute multiple atomic operations in serial or in parallel during the execution of the automation process.

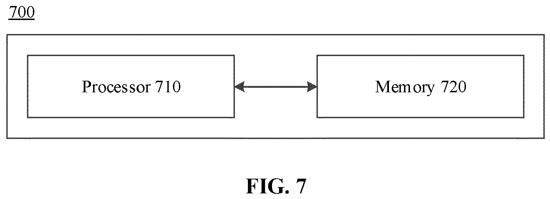

According to a fifth aspect of the present disclosure, an electronic device is provided. FIG. 7 illustrates a schematic block diagram of an electronic device 700 according to an embodiment of the present disclosure. As shown in FIG. 7, the electronic device 700 includes a processor 710 and a memory 720. The memory 720 stores computer program instructions, and the computer program instructions, when being executed by the processor 710, performs the method for controlling the automation system and/or the method for controlling the automation process described above.

According to a sixth aspect of the present disclosure, a storage medium is further provided. The storage medium stores program instructions. The program instructions, when being executed, perform the method for controlling the automation system and/or the method for controlling the automation process described above. The storage medium may include, for example, a storage component of a tablet computer, a hard disk of a personal computer, a read-only memory (ROM), an erasable programmable read-only memory (EPROM), a portable compact disc read-only memory (CD-ROM), a USB memory, or any combination of the above mentioned storage media. The described computer-readable storage medium may be any combination of one or more computer-readable storage media.

Those skilled in the art can understand the specific implementations of the apparatus for controlling the automation system and the apparatus for controlling the automation process described above, the electronic device, and the storage medium by reading the description related to the method for controlling the automation system and the method for controlling the automation process described above, which is not repeated herein for the sake of brevity.

Although the example embodiments have been described herein with reference to the drawings, it should be understood that the above-described example embodiments are merely exemplary and are not intended to limit the scope of the present disclosure. Various changes and modifications may be made by those skilled in the art without departing from the scope and spirit of the present disclosure. All such changes and modifications are deemed to fall into the scope of the claims of the present disclosure.

Those skilled in the art may realize that the units and algorithm steps of each example described in conjunction with the embodiments disclosed herein can be implemented by electronic hardware, or a combination of computer software and electronic hardware. Whether these functions are performed in hardware or software depends on the specific application and design constraints of the technical solution. Those skilled in the art may use different methods to implement the described functions for each particular application, and such implementation should not be regarded as departing from the scope of the present disclosure.

It should be understood that the devices and methods disclosed in the embodiments of the present disclosure may be implemented in other manners. For example, the device embodiments described hereinabove are only schematic. For example, the division of the units is only based on logical functions, and there may be other division manners in actual implementation, such as multiple units or components may be combined or integrated into another device, or some features may be neglected or not executed.

In the specification provided herein, a lot of specific details are explained. However, it can be understood that the embodiments of the present disclosure may be practiced without these specific details. In some instances, well-known methods, structures and techniques are not shown in detail in order to avoid obscuring understanding of the specification.

Similarly, it should be understood that in order to simplify the present disclosure and facilitate understanding one or more of the various aspects of the disclosure, in the description of the exemplary embodiments of the present disclosure, the various features of the present disclosure are sometimes grouped together into a single embodiment, figure, or description thereof. However, the method according to the present disclosure should not be interpreted as reflecting the following intention: the claimed disclosure requires more features than those explicitly stated in each claim. More specifically, as reflected in the corresponding claims, the inventive point is that the corresponding technical problem can be solved with features fewer than all the features of a single embodiment being disclosed. Therefore, the claims following the detailed embodiments are hereby expressly incorporated into the detailed embodiments, where each claim itself serves as an independent embodiment of the present disclosure.

It can be understood by those skilled in the art that, except for mutually exclusive features, all features disclosed in this specification (including the claims, abstract and drawings) and all processes or units of any method or device disclosed in the specification can be combined in any way. Unless otherwise expressly stated, each feature disclosed in this specification (including the claims, abstract and drawings) may be replaced by an alternative feature that provides the same, equivalent or similar purpose.

In addition, it can be understood by those skilled in the art that, although some embodiments described herein include certain features included in other embodiments instead of other features, the combination of features of different embodiments is meant to be within the scope of the present disclosure and form different embodiments. For example, in the claims, any one of the claimed embodiments may be used in any combination.

The various component embodiments of the present disclosure may be implemented in hardware, or in software modules running on one or more processors, or in a combination thereof. It should be understood by those skilled in the art that a microprocessor or a digital signal processor (DSP) may be used in practice to realize some or all of the functions of some of the modules of the apparatus for controlling the automation system and the apparatus for controlling the automation process according to embodiments of the present disclosure. The present disclosure may alternatively be implemented as a program (such as a computer program and computer program product) for performing part or all of the methods described herein. Such a program implementing the present disclosure may be stored on a computer-readable medium, or may be in the form of one or more signals. Such a signal may be downloaded from an Internet website, or provided on a carrier signal, or provided in any other form.

It should be noted that the above embodiments illustrate rather than limit the present disclosure, and alternative embodiments may be designed by those skilled in the art without departing from the scope of the claims. In the claims, any reference symbol between parentheses shall not be construed as a limitation of the claims. The word "comprising" does not exclude the presence of elements or steps not listed in the claims. The word "a" or "an" preceding an element does not exclude the presence of multiple such elements. The present disclosure may be implemented by means of hardware comprising several different elements and by means of a suitably programmed computer. In a unit claim enumerating several apparatuses, several of these apparatuses may be embodied by a same hardware item. The use of the words "first", "second", "third" and the like does not indicate any order. These words may be interpreted as names.

Described above are only specific embodiments of the present disclosure or explanation for the specific embodiments of the present disclosure, and the protection scope of the present disclosure is not limited thereto. Any changes or alternations that can be easily envisaged by those skilled in the art within the technical scope disclosed in the present disclosure shall fall within the protection scope of the present disclosure. The protection scope of the present disclosure shall be in accordance with the protection scope of the claims.

## Claims

1. A method for controlling an automation system, comprising:
determining, in response to an operation of a user, whether a lidding/delidding operation is comprised in an automation process;
determining, in response to the lidding/delidding operation being comprised, whether a starting position and/or a destination position of a task operation in the automation process supports the lidding/delidding operation;
determining, in response to a first determination result being that the starting position and/or the destination position of the task operation in the automation process supports the lidding/delidding operation, the starting position and/or the destination position as an execution position of the lidding/delidding operation; and
sending a task operation instruction in the automation process to a transfer operation execution device, to cause the transfer operation execution device to perform task deduction according to the task operation instruction, wherein the task operation instruction comprises a transfer operation instruction and a lidding/delidding operation execution position parameter instruction.

2. A method for controlling an automation process, comprising:
acquiring a task operation instruction in the automation process;
determining, according to the task operation instruction, whether a lidding/delidding operation is comprised in a task operation corresponding to the task operation instruction;
in response to the lidding/delidding operation being comprised, performing task deduction of the task operation, which comprises: determining, according to a lidding/delidding operation execution position parameter instruction comprised in the task operation instruction, whether an execution position of the lidding/delidding operation is a starting position and/or a destination position of a transfer operation, and continuing, based on a determination result, to perform task deduction of a corresponding task operation to obtain a task deduction result, wherein deduction of performing the lidding/delidding operation at the starting position and/or the destination position is prioritized; and
determining, based on the task deduction result, whether to perform the task operation.

3. The method according to claim 2, wherein the determining, according to a lidding/delidding operation execution position parameter instruction comprised in the task operation instruction, whether an execution position of the lidding/delidding operation is a starting position and/or a destination position of a transfer operation, and continuing, based on a determination result, to perform task deduction of a corresponding task operation comprises:
determining whether the execution position of the delidding operation is the starting position, and determining to perform the delidding operation at the starting position in response to the execution position of the delidding operation being the starting position;
determining whether the execution position of the lidding operation is the destination position, and determining to perform the lidding operation at the destination position in response to the execution position of the lidding operation being the destination position; and
determining whether the execution position of the lidding operation is the starting position and whether the execution position of the delidding operation is the destination position, and continuing task deduction by using different task channels based on a second determination result.

4. The method according to claim 3, wherein the determining whether the execution position of the lidding operation is the starting position and whether the execution position of the delidding operation is the destination position, and continuing task deduction by using different task channels based on a second determination result comprises:
performing, in response to the second determination result meeting a first condition, task deduction by using a first task channel, wherein the first task channel comprises one or more of task operations in sequence: performing the lidding operation at the starting position, a code scanning operation, and placing a transfer object subject to the transfer operation to the destination position,
and wherein the first condition comprises: the execution position of the lidding operation being the starting position, the code scanning operation not being performed during the execution of the transfer operation or the code scanning operation being performed after the lidding operation, and the delidding operation not being performed or the execution position of the delidding operation not being the destination position.

5. The method according to claim 3 or 4, wherein the determining whether the execution position of the lidding operation is the starting position and whether the execution position of the delidding operation is the destination position, and continuing task deduction by using different task channels based on a second determination result comprises:
performing, in response to the second determination result meeting a second condition, task deduction by using a second task channel, wherein the second task channel comprises one or more of task operations in sequence: grabbing the transfer object subject to the transfer operation, the code scanning operation, and performing the delidding operation at the destination position,
and wherein the second condition comprises: the execution position of the delidding operation being the destination position, the code scanning operation not being performed during the execution of the transfer operation or the code scanning operation being performed before the delidding operation, and the lidding operation not being performed or the execution position of the lidding operation not being the starting position.

6. The method according to claim 5 citing claim 4, wherein the determining whether the execution position of the lidding operation is the starting position and whether the execution position of the delidding operation is the destination position, and continuing task deduction by using different task channels based on a second determination result comprises:
performing, in response to the second determination result not meeting the first condition and the second condition, task deduction by using a third task channel, wherein the third task channel comprises one or more of task operations in sequence: grabbing the transfer object from the starting position of the transfer operation, the delidding operation, the code scanning operation, the lidding operation, and placing the transfer object subject to the transfer operation to the destination position.

7. The method according to any one of claims 2 to 4, wherein the task operation instruction comprises a transfer task operation instruction, and the transfer task operation comprises a transfer operation and the lidding/delidding operation, and the performing task deduction of the task operation further comprises:
acquiring a first parameter for the lidding/delidding operation, an operation of releasing the transfer object subject to the transfer operation, and/or an operation of grabbing the transfer object, wherein a parameter in the task operation instruction comprises the first parameter, and the first parameter comprises information of a gripping orientation and/or a gripping height for a lid and/or the transfer object at a first position; and
deducing a second parameter according to the task operation instruction and a parameter prestored in the transfer operation execution device, wherein the second parameter is information of a gripping orientation and/or a gripping height for the lid and/or the transfer object at a second position except for the first position.

8. The method according to any one of claims 2 to 4, wherein the task deduction result comprises execution parameters of a plurality of atomic operations in the task operation,
and the method further comprises: performing the plurality of atomic operations in serial or in parallel during the execution of the automation process.

9. The method according to any one of claims 2 to 4, wherein a parameter in the task operation instruction comprises a lidding/delidding operation parameter, and the lidding/delidding operation parameter comprises any one or more of: the execution position of the lidding/delidding operation, a lid placing position after the delidding operation, a lid picking position before the lidding operation, a gripping orientation for an operation object at the starting position and/or the destination position of the task operation, and a gripping height for the operation object at the starting position and/or the destination position of the task operation.

10. An apparatus for controlling an automation system, comprising:
a first determination module, configured to determine, in response to an operation of a user, whether a lidding/delidding operation is comprised in an automation process;
a first judgment module, configured to determine, in response to the lidding/delidding operation being comprised, whether a starting position and/or a destination position of a task operation in the automation process supports the lidding/delidding operation;
a second determination module, configured to determine, in response to a first determination result being that the starting position and/or the destination position of the task operation in the automation process supports the lidding/delidding operation, the starting position and/or the destination position as an execution position of the lidding/delidding operation; and
an instruction sending module, configured to send a task operation instruction in the automation process to a transfer operation execution device, to cause the transfer operation execution device to perform task deduction according to the task operation instruction, wherein the task operation instruction comprises a transfer operation instruction and a lidding/delidding operation execution position parameter instruction.

11. An apparatus for controlling an automation process, comprising:
an instruction acquisition module, configured to acquire a task operation instruction in the automation process;
a second judgment module, configured to determine, according to the task operation instruction, whether a lidding/delidding operation is comprised in a task operation corresponding to the task operation instruction;
a task deduction module, configured to perform, in response to the lidding/delidding operation being comprised, task deduction of the task operation, which comprises: determining, according to a lidding/delidding operation execution position parameter instruction comprised in the task operation instruction, whether an execution position of the lidding/delidding operation is a starting position and/or a destination position of a transfer operation, and continuing, based on a determination result, to perform task deduction of a corresponding task operation to obtain a task deduction result, wherein deduction of performing the lidding/delidding operation at the starting position and/or the destination position is prioritized; and
a third determination module, configured to determine, based on the task deduction result, whether to perform the task operation.

12. An electronic device, comprising a processor and a memory, wherein the memory stores the computer program instructions, and the computer program instructions, when being executed by the processor, perform the method for controlling the automation system according to claim 1 and/or the method for controlling the automation process according to any one of claims 2 to 9.

13. A storage medium, storing program instructions, wherein the program instructions, when being executed, perform the method for controlling the automation system according to claim 1 and/or the method for controlling the automation process according to any one of claims 2 to 9.
